# EUROPEAN PATENT SPECIFICATION

(11) **EP 0 776 104 B1**
(45) Date of publication and mention of the grant of the patent: **12.02.2003**
(21) Application number: 96402516.7
(22) Date of filing: 22.11.1996
(51) Int. Cl.: H04J 3/06

(54) **Method and network node for resynchronizing frames in a synchronous digital transmission system**
Verfahren und Netzwerkknoten zur Re-Synchronisierung von Rahmen in einem synchronen digitalen Nachrichtenübertragungssystem
Méthode et noeud de réseau pour resynchroniser des trames dans un réseau numérique de transmission synchrone

(30) Priority: 24.11.1995 IT MI952444
(43) Date of publication of application: 28.05.1997
(73) Proprietor: ALCATEL, 75008 Paris (FR)
(72) Inventor: Traverso, Giovanni, Rovagnate (Lecco) 22050 (IT)
(74) Representative: Colombo, Stefano Paolo

(56) References cited:
- EP-A- 0 503 732
- WO-A-92/02999
- US-A- 5 428 612

## Description

The present invention relates to a method, a network node and a system for resynchronizing frames in a synchronous digital transmission system with a timing common to all tributaries, by implementing the "Higher Path Adaptation" function.

A synchronous digital transmission system is, for example, the Synchronous Digital Hierarchy (SDH) system.

In such a transmission system, signals to be transmitted are byte interleaved in a frame structure. In SDH, such a frame is referred to as a synchronous transport module level N (STM-N); it is described, for example, in ITU Recommendations (previously CCITT Recommendations) G.707, G.708, and G.709. The frame consists of 270 columns and 9 rows. Each column of a row contains one byte. In rows 1 to 3 and 5 to 9, columns 1 to 9 contain the so-called section overhead (SOH) for control and error-detection information. The fourth row of columns 1 to 9 contains an administrative unit (AU) pointer referred to as an "AU pointer". The remaining columns and rows contain the information payload. An STM-1 payload is contained, for example, in a virtual container VC-4, which consists of an information payload field and a path overhead (POH) information field.

Further units defined in SDH are, for example, administrative units, such as AU-4, which consist of a virtual container VC and an AU pointer, and tributary units such as TU-12, which consist of a virtual container and a TU pointer.

STM-N signals are transmitted over a transmission link which at given intervals, e.g., at network nodes, contains circuits in which an incoming STM-N signal is adapted to a local (internal) standardized clock of the network node. These circuits perform a clock alignment by a conventional byte justification procedure. At predetermined locations of the frame (as per ITU Recommendation G.709), justification bytes are inserted if required. In the event of a positive justification action, the payload is omitted at the stuff location, and in the event of a negative justification action, the payload is inserted at the stuff location. A justification action is also called "pointer action".

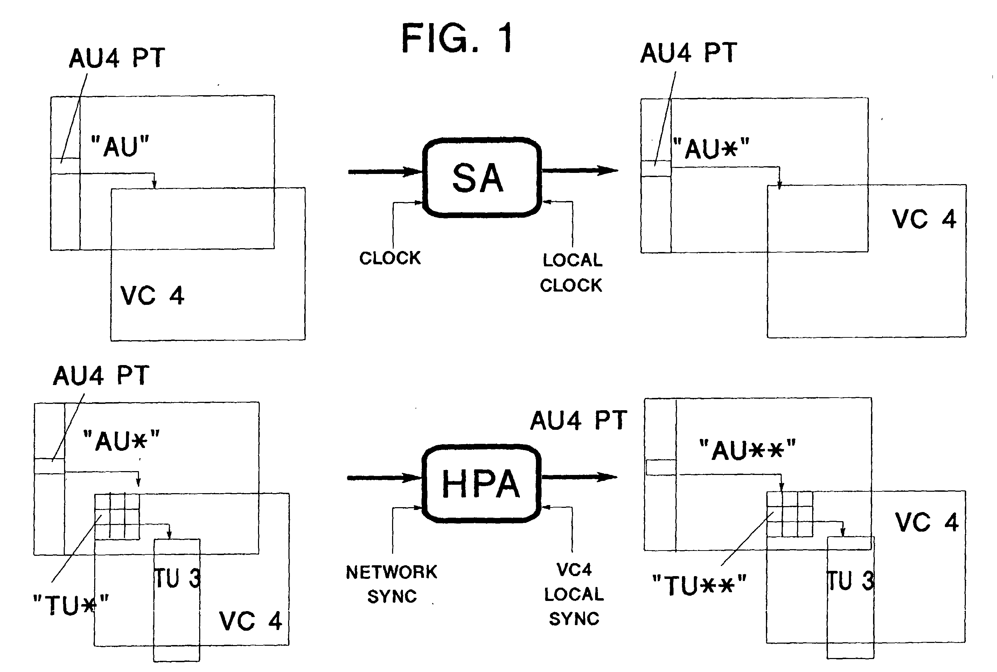

In the synchronous hierarchy apparatus, according to ITU Recommandations G.707, G.708, G.709 and G.783, there are two processing functions called "Section Adaptation", hereinafter referred to as SA, and "Higher Path Adaptation", hereinafter referred to as HPA (see fig. 1).

These functions include a Pointer Interpreter (PI), an elastic memory (EM) and a Pointer Generator (PG), for each processed tributary.

The SA function goal is to equalize the synchronization slips between frame synchronization frequence where the Administrative Unit (AU) has been assembled and the local frame synchronization.

The HPA function goal is to equalize the synchronization slips between the frame synchronization frequence of the virtual container (VC) of higher level (HVC) on the node where the Tributary Unit (TU) has been assembled and the HVC local synchronization.

This enables to eliminate the network wander in relation to the local synchronization, within the limits specified.

Furthermore, the local resynchronization is necessary in order to process the frame content, for example the cross connection among TUs coming from different sources.

The resynchronization of frames in a synchronous digital transmission system can be performed by using the well known FLAG (J1 indicator) technique. According to this technique, 1 extra bit, also called Flag, is assigned to each data byte of an incoming frame in order to signal when the associated byte is the start of the AU payload (VC-4 Container).

This technique is described, for example, in Texas Instrument Product Review - TDC3003 - SONET STS-3/STS-3C/STM-1 Overhead Terminator - Sept. 92 rev. Mar. 94 (page 233).

This technique is also used in EP 0 503 732 A2, wherein the flag is referred to as 'Markierungsinformation' and where it is stated that "The buffer 17 is also supplied with a marker which identifies the beginning of a VC-4 container and is produced by the first detection circuit 13" (col. 8, lines 8-11), and "The second detection circuit 21 further receives from the buffer 17 the marker which denotes when a VC-4 container commences. The bytes of the areas H1 and H2 are encoded in accordance whith this marker" (lines 35-40).

From EP 0 503 732 (D1), which is considered the closest prior art, a transmission system for synchronous digital hierarchy, having an adapter circuit for compensating for phase fluctuations of an STM-N signal is known. In D1, for inserting stuffing bits for at least one container of the STM-N signal, the adapter circuit contains a buffer memory, a write address generator, a read address generator, a stuffing decision circuit and an output circuit. The buffer memory is provided for writing in data of the container and for reading out data of the container. The write address generator is intended for forming write addresses for the data to be written in and the read address generator is intended for forming read addresses for the data to be read out. The stuffing decision circuit is used for forming the mean value of the differences of the addresses of the read and write address generator over a certain period and for forming a stuffing signal dependent on the mean value. The output circuit is provided for forming negative or positive stuffing bits in the container in dependence on the stuffing signal and for forming an output signal from the data stored in at least one buffer memory.

In EP 0 503 732 A2 the FLAG is ignored during justification events due to error in identification of the flag itself, as no actions are described in order to solve this problem.

Furthermore according to ITU standards, state variables and in particular the payload pointer value and the frame byte counter, when updated during justification events, do not guarantee consistency and errors may be generated.

The technical problem is related to errors generation, caused by inconsistency among registers storing values.

The invention as claimed solves this problem by providing a method as set forth in claim 1 or 2.

Claims 5 and 6 recite a network node, and claim 9 recites a synchronous digital transmission system solving the above mentioned problem.

When resynchronizing frames in a synchronous digital transmission system by using the FLAG technique as described before, the invention teaches how to choose the time to update the pointer value enabling a consistent comparison between the pointer value and the byte counter, avoiding the comparison between values belonging to different frames and in particular to one frame and its consecutive one, in order to identify when the byte J1 occurs and to have, in this case, a FLAG generation also during justification events.

In the case of the Pointer Interpreter (PI) justification, the following actions are performed on the Pointer Interpreter side:
a) when H3 is received, the pointer is updated and the counter assumes the maximum value for the pointer for that tributary; or
b) when H3 is received, the pointer assumes the minimum value for the pointer for that tributary, and when PJOPP is received the pointer is updated.

In the case of the Pointer Generator (PG) justification, the following actions are performed on the Pointer Generator side:
a) when H3 is received the pointer is updated and the counter assumes the maximum value for the pointer for that tributary; or
b) when H3 is received the pointer assumes the minimum value for the pointer for that tributary and when PJOPP is received the pointer is updated

The proposed method avoids errors when positioning the FLAG in case of a justification event.

Further advantageous features of the invention are claimed in the dependent claims.

The present invention also makes it possible to simplify synchronous digital equipment, since no exceptions need to be taken into account and no buffer is required to store changing pointer values.

The present invention also relates to a state machine implementing a real time reaction to NDF events.

Furthermore, the aforesaid method can be implemented in a time sharing environment treating multiple tributary units one at a time by using only two pointers (PI/PG).

The invention will now be described in detail, by way of example, with reference to the accompanying drawings, in which:
Fig. 1 shows the SA and HPA functions according to ITU standards;
Fig. 2 shows a J1 flag addressing function implementation according to the prior art;
Fig. 3shows a device implementing a flag generation function according to the prior art;
Fig. 4 shows an example of pointer updating, according to the prior art which causes an error condition;
Fig. 5 shows an example of pointer updating according to the invention which eliminates the error condition;
Fig. 6 shows two examples of pointer updating according to the invention;
Fig. 7 shows a device implementing a flag interpretation function according to the prior art;
Fig. 8 shows two examples of pointer updating according to the invention;
Fig. 9 shows two possible solutions of pointer and counter updating, according to the invention;
Fig. 10 shows a pointer generator state diagram; and

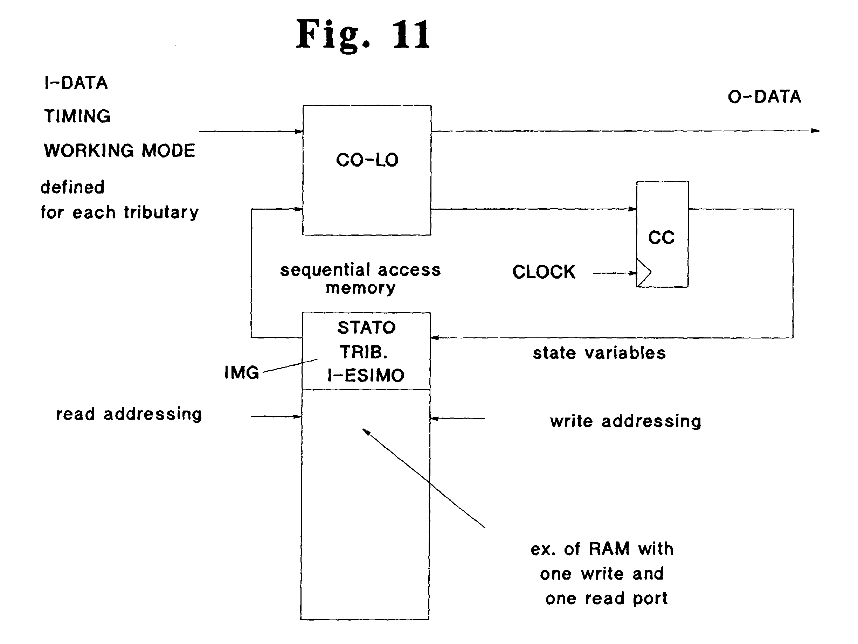

Fig. 11 shows how the invention can be used in a time sharing environment.

Tab. 1 is a table of acronyms used in the in the description of the present invention.

The examples given in describing the invention are related to a method, a network node and a system for resynchronizing frames in an SDH synchronous digital transmission system, but it is obvious to a person skilled in the art that what mentioned is also valid for a SONET synchronous digital transmission system, by considering the equivalent terminology. For example a Tributary Unit (TU) in the SDH terminology is equivalent to a Virtual Tributary (VT) in SONET terminology, and so on.

In Figure 1 the elaboration functions called "Section Adaptation" SA and "Higher Path Adaptation" HPA are shown, according to the ITU Recommendations G.707, G.708, G.709 and G.783. These two functions are usually present on synchronous hierarchy apparatus.

These functions include a pointer interpreter PI, an elastic memory EM and a pointer generator PG for each tributary processed, not shown in figure.

The SA function goal is to equalize the synchronization slips between frame synchronization frequence where an Administrative Unit AU has been assembled and the local frame synchronization.

The HPA function goal is to equalize the synchronization slip between the frame synchronization frequence of the virtual container VC-i of higher level HVC on the node where the Tributary Unit TU-j has been assembled and the HVC local synchronization.

This enables to reject the network wander in relation to the local synchronization, in the specified limits.

Furthermore, the local resynchronization is necessary in order to process the frame content, for example the cross connection among TUs coming from different sources.

The frame downstream of the PG in SA is synchronized with the local clock; the frame downstream of the PG in HPA is synchronized with a VC-4 synchronism locally generated (wherein i = 4).

In an equipment in which tributary coming from different sources are to be processed the timing is provided by a local clock and a fixed VC-4 synchronism, and all lower level tributary TU-j downstream of HPA are synchronized with the local clock.

In the figure the aforesaid concepts are shown irrespective of the AU pointer moving, the tributary downstream of HPA are always in the same position, with respect to the VC-4 in which they are contained, determined by the new AU pointer AU**; if the AU** pointer is fixed to a value, then all tributaries are synchronized to a steady reference called "multiframe synchronism".

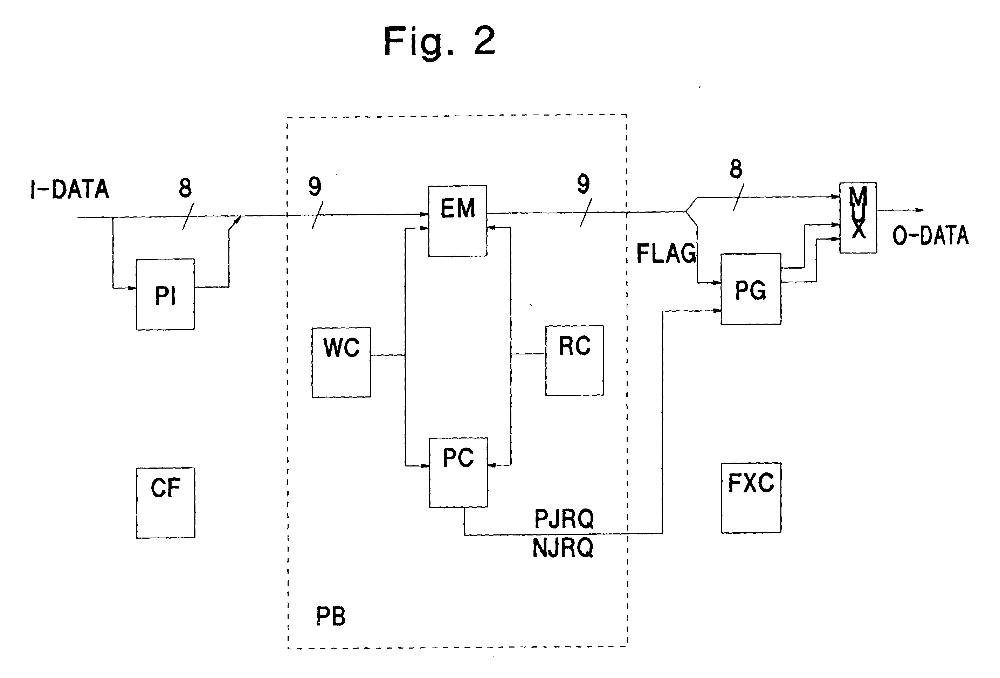

In Fig. 2 a J1 flag addressing function implementation is shown, where J1 is a group of 3 bytes in the Administrative Unit pointer area or 1 byte of the tributary unit pointer area.

This function includes a pointer interpreter PI, a pointer buffer PB including an elastic memory EM and a pointer generator PG for each tributary processed.

Being all cases similar to a TU-3 tributary, the latter will be used as an example in the following description.

The PI extracts the pointer value from an incoming frame I-DATA.

By using such value the first payload byte is identified (in the example the J1 byte in a TU-3).

A FLAG bit is associated with the data flow (8 bits) and assumes the value 1 only in correspondence with J1.

The 9 bits so obtained are stored in the elastic memory EM in pointer buffer PB.

The pointer buffer PB is built up of the following parts: a writing counter WC, a reading counter RC and a phase comparator PC.

The writing counter WC is driven by an incoming frame byte counter CF, enabling WC during information bytes and justification information provided by the pointer interpreter PI.

The phase comparator PC checks the elastic memory EM filling by asking pointer generator PG for positive or negative justification (PJRQ or NJRQ). The pointer generator PG, by reading FLAG, identifies J1 byte from the data flow and, depending on an outgoing frame byte counter FXC, deducts the pointer value to be inserted in the outgoing frame O-DATA (H1 and H2 bytes, in the TU-3 example).

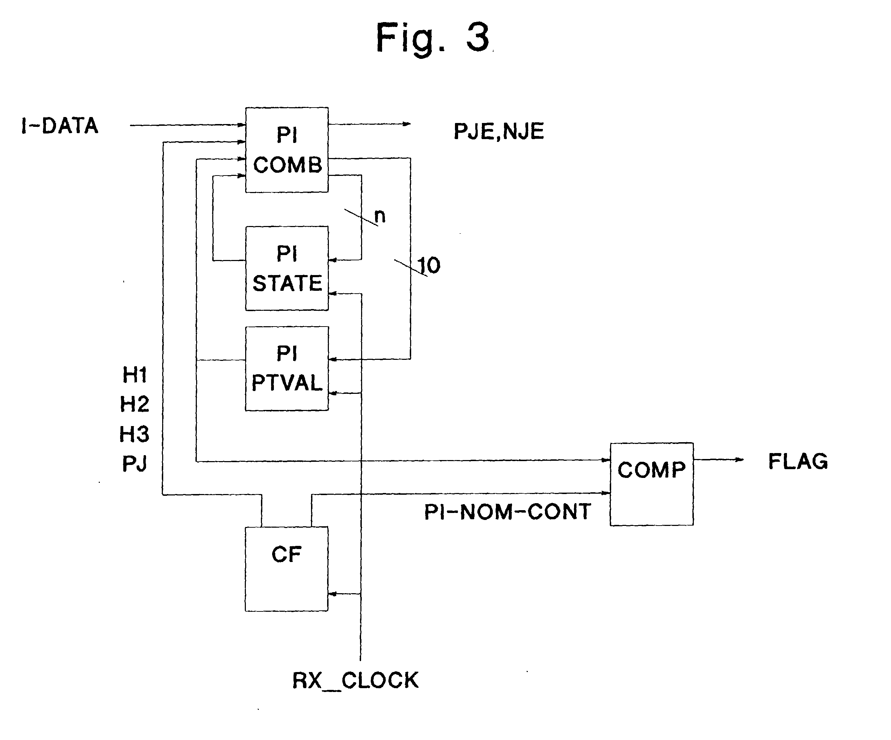

The FLAG method can be implemented according to different solutions. The solution provided by the invention solves the problem of J1 identification during pointer movement, thus simplifying the hardware. In Fig. 3 a flag generation function implementation is shown.

The incoming frame byte counter CF is requested to generate four timing signals to identify the H1, H2, H3, PJOPP (Positive Justification OPPortunity) temporal positions.

The pointer interpreter algorithm is realized by a PI combinational logic block PI_COMB and a PI state storage block PI_STATE, wherein: PI_COMB contains combinational logic and PI_STATE contains the memory necessary, according to ITU requirements.

Furthermore a PI pointer value memory register PI_PTVAL is necessary to store the actual pointer value.

PI_COMB by working on the actual state of the finite state machine (depending on PI_STATE), determines its evolution (future state to be written into PI_STATE register and pointer value to be written into PI_PTVAL), Positive Justification Event PJE signalling and Negative Justification Event NJE signalling, to indicate whether a positive or a negative justification is in progress in the current frame.

The comparator COMP signals active FLAG when the value of the frame byte counter PI-NOM-CONT is equal to the current value of the pointer PI-PTVAL.

PI-NOM-CONT, generated by CF, is the frame number of byte to which ITU refers to specify the pointer significance.

The claimed method, specifies in which moment state variables should be updated in order to generate a FLAG always consistent under every condition.

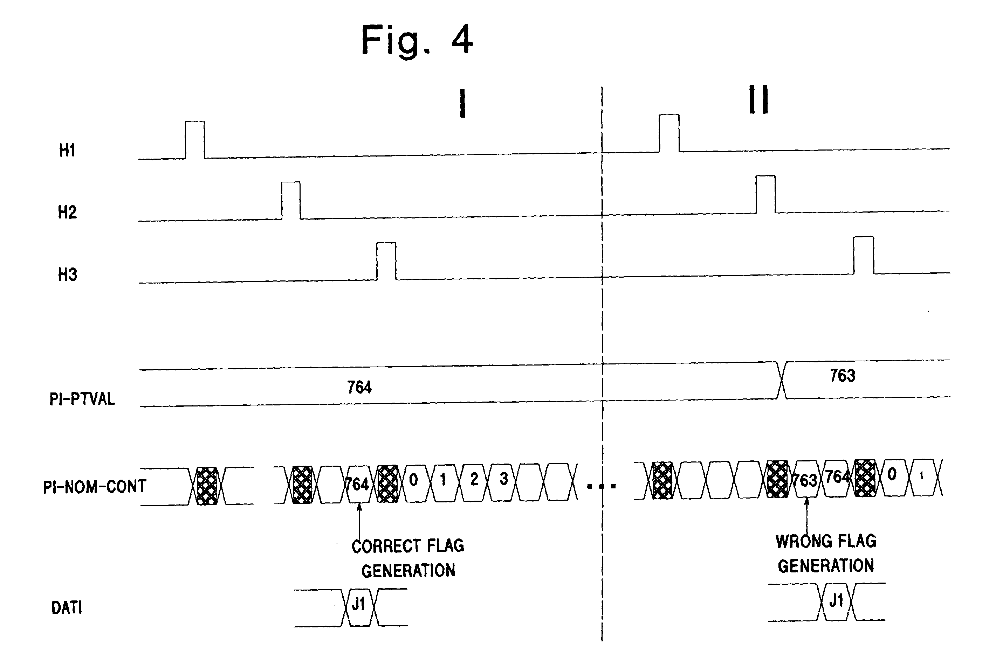

Fig. 4 illustrates an example of pointer updating, according to prior art, causing an error condition. In this figure part I shows a correct flag generation and part II shows a wrong flag generation.

In the figure, a temporal diagram shows the H1, H2, H3 and DATA bytes occurring and the Pl-PTVAL, PI-NOM-CONT updating in relation to COMP action which was described in Fig. 3.

In PI-NOM-CONT the dark crossed byte corresponding value has not been specified by ITU Recommendations.

Once an H2 byte has been received, PI (see Fig. 2) can decide the new pointer value and the Pl-PTVAL content (see Fig. 3); in example of part II 764 is updated to 763; the machine state will be updated.

PJE and NJE signals will be updated and maintained at the same value, at least until the positive or negative justification occurrence, or updated when next H2 byte will be received.

If PI_PTVAL is updated during H2 reception, as it happens in known realizations, FLAGs can be generated in wrong positions.

To better explain how the invention solves the problem of errors generation during justification events, we examine the case of a positive justification decrementing the pointer value Pl-PTVAL from the old value 764 to a new value 0 (part II). In the prior art it is not specified when this updating is performed. Furthermore the following errors have not been identified.

For instance, considering the updating of a pointer value Pl-PTVAL to be performed during H2 occurrence, when at the end of one frame and the beginning of its consecutive frame, the frame byte counter PI-NOM-CONT will be counting the last bytes of the old frame and the pointer value PI-PTVAL will have just been updated with the value related to the new frame; in this case the comparison between the Pl-PTVAL and PI-NOM-CONT will be inconsistent because the two values refer to different frames.

The flag so generated will be wrong.

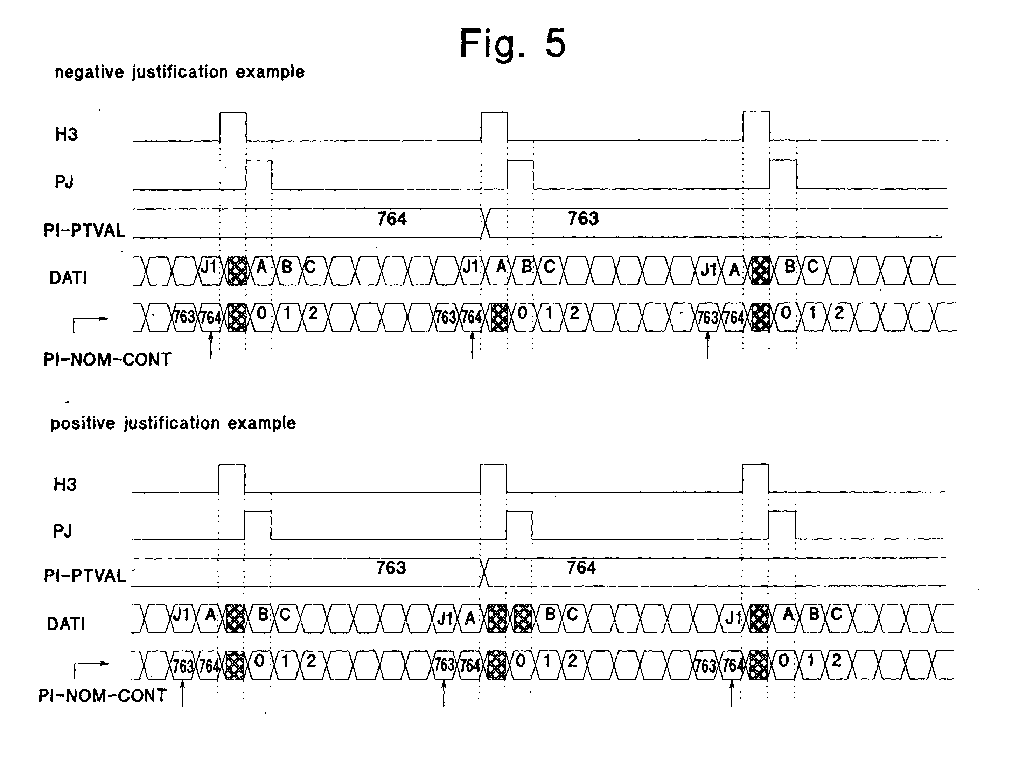

Fig. 5 shows an example of pointer updating, according to the invention, which solves the error condition, wherein we have a first part related to a negative justification event and a second part related to a positive justification event.

In this example A, B, C are data bytes and J1 is one of these bytes and in particular is the first payload byte; Pl-NOM-CONT is an externally synchronized counter assuming incrementing values counting from 0 to the maximum number of bytes per frame. The prior art does not specify the value to be assigned to dark crossed bytes.

The method as claimed specifies, in case of justification, that the pointer value is to be updated in correspondence with H3 or PJOPP byte reception by incrementing/decrementing as required.

In so doing the pointer value is not changed until the frame is updated.

Furthermore, a value to be assigned to PI-NOM-CONT during H3 reception is defined by the invention (the ITU does not assign a numeric value).

By not doing that, in known realizations a FLAG can be omitted during negative justification and the pointer value can assume a value comprised between 0 and the maximum value (764 in the TU-3 example).

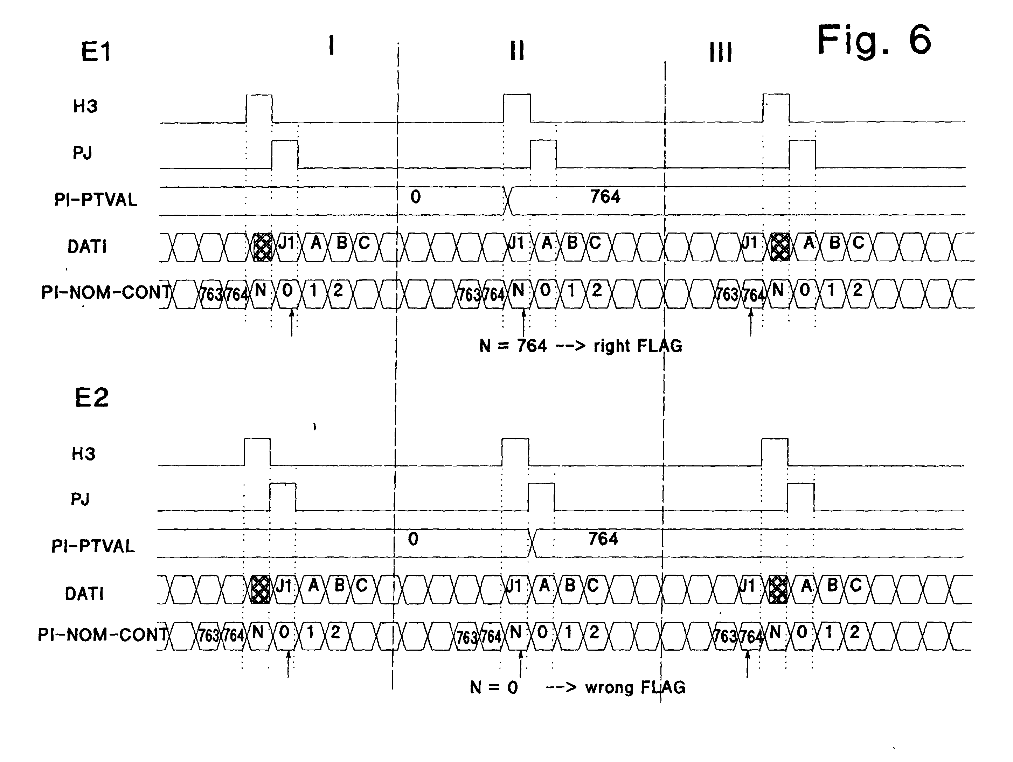

Fig. 6 shows two examples E1 and E2 of pointer updating according to the invention, subdivided into parts I, II and III. In the example E1 a negative justification is shown, in this example Pl-PTVAL is updated when H3 is occurring; in the example E2 a positive justification is shown, in this example Pl-PTVAL is updated when PJ is occurring.

In this example A, B, C are data bytes and J1 is one of these bytes and in particular is the first payload byte; PI-NOM-CONT is a counter externally synchronized assuming incrementing values counting from 0 till the maximum number of bytes per frame.

In case of the PI justification, the following actions are performed on the pointer interpreter side:
a) when H3 is received (ex. E1, part II) the pointer is updated and the counter assumes the maximum value for the pointer for that tributary (764 in our TU-3 example); or
b) when H3 is received (ex. E2, part II) the pointer assumes the minimum value for the pointer for that tributary (0 in our TU-3 example) and when PJOPP is received the pointer is updated and Pl-PTVAL is changed from 0 to 764.

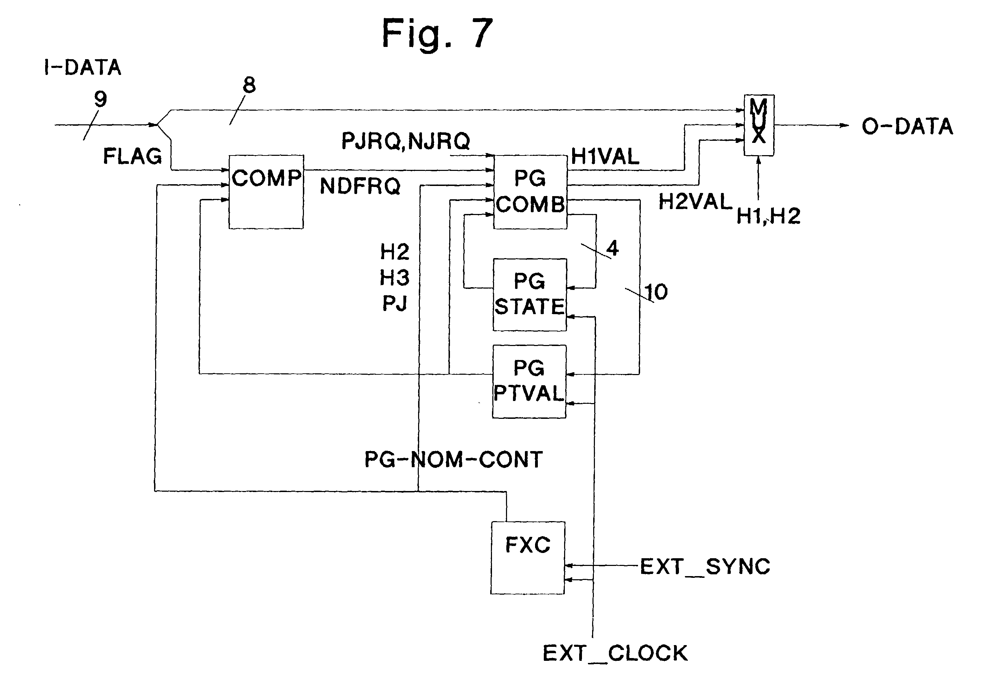

Fig. 7 shows a device implementing a flag interpretation function according to the prior art.

Data read from the elastic memory (9 bits) are joined with a FLAG indicating the J1 byte occurrence (in the example of TU-3 tributary).

The FLAG activates the comparator COMP to compare the pointer current value obtained by PG-PTVAL register with the PG-NOM-CONT counting, which repeats the counting as specified by ITU to identify the J1 byte starting from the pointer, like in the PI case.

Should said comparison notice different values (due, for example, to memory overflow or to New Data Flag event on PI) the pointer should be hooked up.

This event has been specified by ITU like New Data Flag NDF and is requested to a PG combinational logic PG-COMB as active New Data Flag Request NDFRQ.

The sequential machine realizing the pointer generator according to ITU Recommendations is composed of the following parts:
- a combinational logic PG-COMB, provides the updated H1 and H2 value to be inserted into outgoing data through a multiplexer MUX;
- a register containing the machine state PG-STATE;
- a register containing the current pointer value PG-PTVAL; and
- a timer synchronized with an external clock and synchronism (EXT_CLOCK and EXT-SYNC) analogous to the outgoing frame byte counter FXC in fig. 2.

It should be pointed out that there is no constraint to synchronization positions in PI and PG.

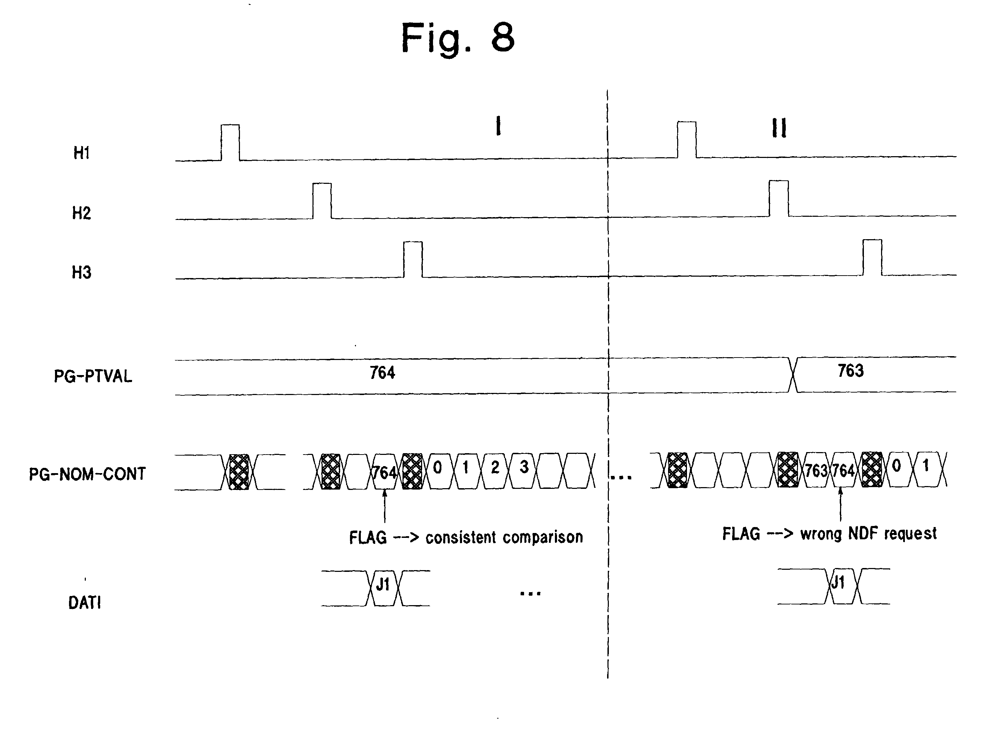

In Fig. 8 two examples I and II of pointer updating are shown including an error typical of the prior art.

In the figure a temporal diagram shows the H1, H2, H3 and DATA bytes occurring and the PG-PTVAL, PG-NOM-CONT updating in relation to COMP action which was described in Fig. 7.

In PG-NOM-CONT the dark crossed byte corresponding value has not been specified by ITU Recommendations.

In the first case I the comparison between PG-PTVAL and PG-NOM-CONT is consistent and a flag is generated when J1 is occurring.

In the second case II a false NDF request is generated.

The inconvenience of the known methods updating the pointer value when H2 is occurring and needing a flag masking for frames during justification events, is the loosing of the correlation between PI and PG during flag masking (for example NDF received by PI, if any, are not processed at their reception as specified by the ITU recommendations).

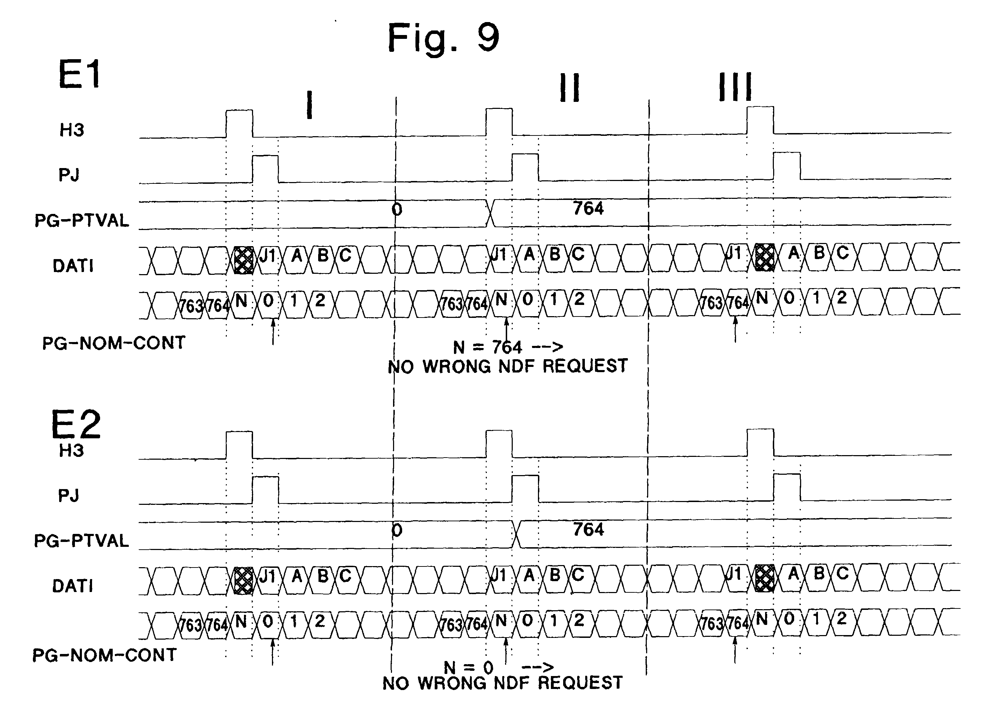

Fig. 9 shows two possible solutions of pointer and counter updating, according to the invention.

In the figure a first part E1 is related to a negative justification event and a second part E2 is related to a positive justification event, subdivided in parts I, II and III.

In this example A, B, C are data bytes and J1 is the first payload byte; PG-NOM-CONT is a counter externally synchronized assuming incrementing values counting from 0 till the maximum number of bytes per frame. The prior art does not specify the value to be assigned to dark crossed bytes. The problem solved is similar to the one shown for PI (Fig. 5).

The method as claimed specifies, when a positive/negative justification is occurring, that the pointer value is to be updated in correspondance of H3 or PJOPP byte reception by incrementing/decrementing as required.

In so doing the pointer value is not changed until the frame is updated.

Furthermore, a value to be assigned to PG-NOM-CONT during H3 reception is defined by the invention.

Because of the same problems shown for PI, it is desirable to increment/decrement the pointer value when a positive/negative justification is occurring, assigning the minimum/maximum value to the byte counter, as not specified by the ITU, when H3 is occurring.

Also in this case the method specifies the pointer value updating when a positive/negative justification event is occurring.

When the byte J1 is occurring the flag is received and the comparison between PG-PTVAL and PG-NOM-CONT is enabled. By fixing when PG-PTVAL is to be updated it is determined which value is to be assigned to PG-NOM-CONT when H3 is occurring, in order to avoid generation of false NDF requests when the pointer assumes the value 0 and then its maximum value (for example 763 in case of a TU-3 tributary) because of a negative justification.

In case of the PG justification, the following alternative actions are performed on the pointer generator side:
a) when H3 is received the pointer is updated (E1, part II) and the counter assumes the maximum value for the pointer for that tributary (n = 764 in our TU-3 example); or
b) when H3 is received (E2, part II) the pointer assumes the minimum value for the pointer for that tributary (n=O in our TU-3 example) and when PJOPP is received the pointer is updated.

The invention takes advantage of the memory saving by using a single buffer to store the pointer value, differently from the known methods. According to prior art NDF requests are not real time managed.

The real time management is solved, according to our invention, as follows: when COMP (see Fig. 7) finds the current pointer value PG-PTVAL different from the byte number PG-NOM-CONT for which the flag is active, it asks PG to transmit the ITU NDF indication in the next H1 and H2 bytes and to assume as a new value for the pointer the current value of the byte counter PG-NOM-CONT.

This may happen when any byte of the frame is occurring.

The known methods, based on PG evolution when the H2 byte is occurring, need a temporary buffer to store the temporary value to be used to update PG-PTVAL.

By enabling the PG sequential machine to evolve rrespectve of which byte is occurring and by doing the following, a buffer can be saved and not added to the circuitry.

If the H1 and H2 group of bytes has just been transmitted, the PG-PTVAL register can be updated and the sequential machine state can be set as waiting for H1 and H2 to signal NDF.

Should NDF request occur when H1 has just been transmitted and H2 is to be transmitted, it would not be correct to update the PG-PTVAL value because the H1 and H2 group of bytes would not be consistent.

It is possible to update the part of PG-PTVAL which has just been transmitted in the previous H1 (that means the two most significant bits) without causing inconsistency, bringing the sequential machine in the NDF waiting state.

In this way H2 will be transmitted as said before, the next H1 will transmit the NDF signalling with the two PG-PTVAL bits updated, later when the flag will be received the remaining 8 bits of the register PG-PTVAL will be updated.

Referring to Fig. 7, the machine mentioned above should be built up by a combinational logic PG-COMB, a register PG-STATE and a register PG-PTVAL.

It realizes the generation of the pointer bytes as specified by ITU, these bytes will be inserted in the outgoing frame by the MUX.

The justifications are decided following the comparison realized in PB between the reading and the writing addresses of the elastic memory.

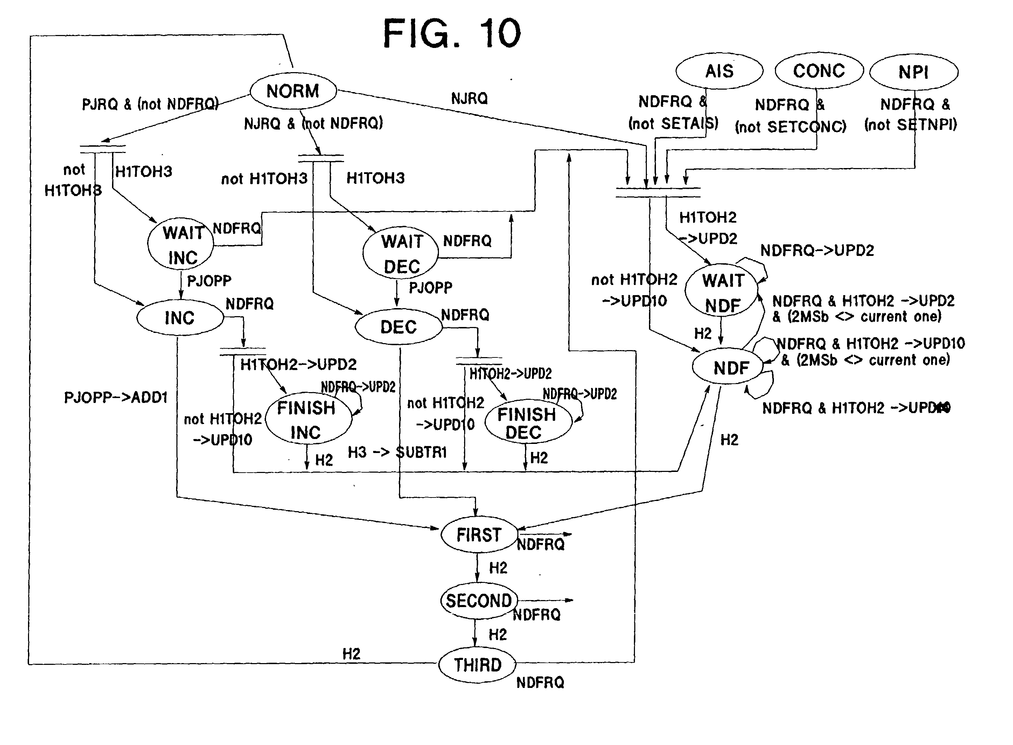

Fig. 10 shows a pointer generator state diagram.

The diagram has been drawn according to state machine formalism, wherein:
circles are states;
archs are transactions from one state to another, the relevant operations are stated sideways; and
double lines with one or more input and output show different alternatives depending on the conditions specified (usually related to an external input value).

Under normal working conditions, the state machine is in state NORM and receives requests for positive or negative justifications PJRQ and NJRQ for adapting an incoming signal to an internal clock rate.

When necessary (for example due to memory overflow), the sequential machine can be forced externally toward the following states: AIS (Alarm Indication Signal), CONC (concatenated pointer), NPI (Null Pointer Indication), according to ITU Recommendations.

After removal of external forced commands, the state machine is restarted NDF and evolves toward the state NORM, ready to begin the normal working.

It is assumed that the following hypothesis are satisfied:
the FLAG is always associated to the first tributary frame byte;
after removing the AIS signal (indicating a data error), the state machine changes the AIS state when receiving the first FLAG, by generating an NDF request causing a restart. During the AIS state, the value of PG-PTVAL (see Fig. 7) is 11111111 = 1023, which is chosen not to be one of the possible values of PG-NOM-CONT in order to cause an NDFRQ;
the CONC state is forced and removed as AIS;
the NPI state is forced and removed as AIS;
during the H1 and H2 intervals, important events are stored and operations are enabled when the current pointer transmission is terminated (that is after H2).

Positive justication decision INC or negative justication decision DEC are taken when PJOPP or H3 are occurring;
PJRQ and NJRQ cannot occur simultaneously;
SETAIS which set the state AIS, SETCONC which set the state CONC, SETNPI which set the state NPI, cannot occur simultaneously; and
no PJRQ, NJRQ, NDFRQ may arise when H1 or H2 is occurring.

In the following, the possible state machine inputs shown in the diagram are listed:
NDFRQ: NDF request, activable when every byte of the tributary frame is occurring but not during H1 or H2 which do not transport data bytes;
PJRQ: positive justification request generated by COMP (see Fig. 2) is activable as NDFRQ;
NJRQ: negative justification request generated by COMP (see Fig. 2) is activable as NDFRQ;
H2: when H2 is inserted in the frame;
H3: when H3 is inserted in the frame;
PJOPP: when the positive justification is performed;
H1TOH2: signal active during the H1/H2 interval;
H1TOH3: signal active during the H1/H3 interval;
SETAIS: external AIS state set;
SETCONC: external CONC state set;
SETNPI: external NPI state set.

The state machine reactions to the aforesaid inputs are described in more details for each state.

The pointer bits to be inserted in H1 and H2 are taken directly from PG-PTVAL, except in case of positive justification decision INC or negative justification decision DEC signalling (in this case, according to ITU, the bits to be incremented I or the bits to be decremented D should be complemented).

The NDF and SS bits should be determined by the state of the machine.

For the following states:
AIS: the current value of the pointer PG-PTVAL is set all 1; exit condition: the first NDFRQ occurrence from when SETAIS is not active;
CONC: NDF = 1001, SS not defined, PG-PTVAL=1111111111; exit condition: the first NDFRQ from when SETCONC is not active anymore;
NPI: NDF=1001, SS not defined, PG-PTVAL=1111111111; exit condition: the first NDFRQ from when SETNPI is not active anymore;
NORM: this is the normal working condition, NDF = 1001, SS depends on the tributary (10 for TU3s, 00 for TU2s, 10 for TU12s);
INC: NDF=0110, SS as NORM, I odd bits of PG-PTVAL are transmitted complemented, the incremented PG-PTVAL is calculated and written into the register when PJOPP is occurring, parallely the future machine state is defined as state FIRST;
DEC: NDF = 0110, SS is NORM, D even bits of PG-PTVAL are transmitted complemented, the decremented PG-PTVAL is calculated and written into the register when H3 is occurring, parallely the future machine state is defined as state FIRST;
FIRST: first frame (or multiframe depending on the tributary) subsequent to an INC or DEC or NDF state, the pointer is signalled as NORM;
SECOND: second frame (or multiframe depending on the tributary) subsequent to state FIRST after an INC or DEC or NDF state, the pointer is signalled as NORM;
THIRD: third frame (or multiframe depending on the tributary) subsequent to states FIRST and SECOND after an INC or DEC or NDF state, the pointer is signalled as NORM;
NDF :
   if a New Data Flag ReQuest (NDFRQ) occurs between H1 and H2, a group of 6 bytes in the Administrative Unit pointer area, in case of two subsequent flags because of a PI resynchronization: the pointer value PG-PTVAL is updated again, or
   if a further New Data Flag ReQuest (NDFRQ) occurs between H1 and H2 and if the more significant bits in a pointer value PG-PTVAL, transmitted with H1, have not been modified: a flag H1TOH2 is active, the remaining 8 bits are updated and transmitted with H2 when the evolution state is state FIRST, or
   if a further New Data Flag ReQuest (NDFRQ) occurs between H1 and H2 and if the 2 most significant bits in the pointer value PG-PTVAL, transmitted with H1, should be modified: a flag H1TOH2 is active, only the 2 more significant bits are updated, and the machine state evolves toward a state WAIT_NDF, to complete the current New Data Flag (NDF) signalling and then transmit the next one.
WAIT_NDF: NDFRQ transmission waiting state; exit condition: when H2 is occurring, an evolution toward the state NDF is done; if a further NDFRQ appears then the 2 most significant bits are updated;
WAIT_INC: INC operation waiting state; exit condition: when H2 is occurring, an evolution toward the state INC is done, or when NDFRQ is occurring an evolution toward the state WAIT_NDF or NDF is done;
WAIT_DEC: DEC operation waiting state; exit condition: when H2 is occurring, an evolution toward the state DEC is done, or when NDFRQ is occurring an evolution toward the state WAIT_NDF or NDF is done;
FINISH_INC: NDF waiting state, if an INC signalling was in progress; when entering in this state, only the 2 most significant bits of PG-PTVAL are updated, being just transmitted by the progressing signalling; if a further NDFRQ appears, the same bits are updated;
FINISH_DEC: NDF waiting state, if a DEC signalling was in progress; when entering in this state, only the 2 most significant bits of PG-PTVAL are updated, being just transmitted by the progressing signalling; if a further NDFRQ appears, the same bits are updated.

The operations shown in diagram sideways archs, performed on the PG-PTVAL contents are described in details:
ADD1: increments by 1;
SUBTR1: decrements by 1,
UPD10: updates all bits by copying the value from PG-NOM-CONT;
UPD2: updates the 2 most significant bits by copying the value from PG-NOM-CONT.

In the following the machine states are listed and for each state the possible events are listed according to their priority:
state NORM:
   SETAIS or SETCONC or SETNPI
   NDFRQ or PJRQ or NJRQ
state INC:
   SETAIS or SETCONC or SETNPI
   NDFRQ
   PJOPP
state DEC:
   SETAIS or SETCONC or SETNPI
   NDFRQ
   H3
states WAIT_INC and WAIT_DEC:
   SETAIS or SETCONC or SETNPI
   NDFRQ
   PJOPP
states FINISH_INC and FINISH_DEC:
   SETAIS or SETCONC or SETNPI
   NDFRQ or H2
states NDF and WAIT_NDF:
   SETAIS or SETCONC or SETNPI
   NDFRQ or H2
toward FIRST, SECOND, THIRD:
   SETAIS or SETCONC or SETNPI
   NDFRQ or H2
state AIS:
   SETAIS or SETCONC or SETNPI
   NDFRQ
state CONC
   SETAIS or SETCONC or SETNPI
   NDFRQ
state NPI
   SETAIS or SETCONC or SETNPI
   NDFRQ

In the following an example of the state machine execution is described, according to the previous state machine description.

There is no need to describe all the possible execution examples.
Starting state: NORM.
Transaction: PJRQ.
Action: evolution toward state INC, after evaluation of the condition H1TOH3 if negative, then justification PJOPP is performed; PG-PTVAL is updated PJOPP->ADD1; the state machine evolves toward state FIRST.
Transaction: H2 is occurring.
Action:evolution toward state SECOND.

Now an externally forced command arises and it will be shown how the invention manages it in real time.
Transaction: AIS alarm.
Action: SETAIS.

Now the external alarm is removed, after this the machine will be waiting for the next NDFRQ that will arise when a J1 flag will be read.
Action: NDFRQ (the state machine is going to be restarted); the condition H1TOH2 is evaluated and if not satisfied PG-PTVAL is updated (not H1TOH2->UPD10).
Transaction: H2 is received.
Action: evolution toward state FIRST.
Transaction: H2 is received.
Action: evolution toward state SECOND.
Transaction: H2 is received.
Action: evolution toward state THIRD.
Transaction: H2 is received.
Action: evolution toward state NORM.

Fig. 12 shows how the invention can be used in a time sharing environment.

One of the most interesting characteristics of the claimed method is the possibility to be used in time sharing.

The above mentioned state machines are organized according to fig. 12, with a combinational logic CO-LO operating on memory bits maintaining in a register an image IMG of the machine state.

The proposed architecture is such to use the natural succession of the bytes I-DATA belonging to the various tributary in the SDH frame, working on data and bits in the memory, of one tributary at a time.

The same combinational logic may be shared among all the tributaries, by synchronizing the sequence of the state variables to the sequence of tributary units TU in the frame.

This is obtained thanks to a centralized counter CC which suitably scans the TU addressing and provides time signalling common to all tributaries.

The described invention is felt to have considerables advantages in terms of error elimination, making it possible to simplify the circuits and enabling a cost reduction ed a better affidability.

**TABLE 1**

| **ACRONYMS AND SYMBOLS** | |
|---|---|
| A, B, C | data bytes |
| AIS | Alarm Indication Signal |
| AU | Administrative Unit |
| AU** | new AU pointer |
| CF | Cont Flow |
| CF | Incoming frame byte counter |
| COMP | PI-PTVAL / PI-NOM-CONT comparator |
| CONC | Concatenated Pointer |
| EM | Elastic Memory |
| EXT-CLOCK | external clock |
| EXT-SYNC | external synchronization |
| FXC | Outgoing frame byte counter |
| HPA | Higher Path Adaptation |
| HVC | Higher Virtual Container |
| I-DATA | input data |
| J1 | first payload byte |
| NDF | New Data Flag |
| NDFRQ | New Data Flag Request |
| NJE | Negative Justification Event |
| NJOPP | Negative Justification Opportunity |
| NJRQ | Negative Justification Request |
| NPI | Null Poker Indication |
| O-DATA | output data |
| PB | Pointer Buffer |
| PC | Phase Comparator |
| PG | Pointer Generator |
| PG-COMB | PG combinational logic |
| PG-PTVAL | PG pointer value |
| PG-STATE | PG state |
| PI | Pointer Interpreter |
| PI-COMB | PI combinational logic block |
| PI-NOM-CONT | frame byte counter |
| PI-PTVAL | PI pointer value memory register |
| PI-STATE | PI state storage block |
| PJE | Positive Justification Event |
| PJOPP | Positive Justification Opportunity |
| PJRQ | Positive Justification Request |
| POH | Path Overhead |
| RC | reading counter |
| SA | Section Adaptation |
| SOH | Section Overhead |
| TU-j | Tributary Unit j |
| VC-i | Virtual Container i |
| WC | writing counter |

## Claims

1. A method of updating an interpreted pointer or a generated pointer to a payload in each frame of a tributary in a synchronous digital transmission system adapting an incoming signal to an internal clock rate of the network node by positive or negative justification actions, using a flag technique which involves generating a flag signal identifying the tributary byte indicated by a pointer in each frame, said method including the following steps:
• extracting the interpreted pointer to the payload from an incoming frame;
• assigning a flag bit, which is true when the first payload byte (J1) is occurring;
• storing payload data in an elastic memory;
• comparing (PC) the phases from a writing counter (WC) and a reading counter (RC), by checking the memory filling level and requiring positive or negative justifications (PJRQ, NJRQ) when necessary; and
• generating a new pointer to the payload, where the pointer value is incremented after the positive justification or decremented after the negative justification,
**characterized by** the step of
performing actions on the Pointer Interpreter or Pointer Generator side, in order to always have a flag generation when a justification event is occurring when, a group of 3 negative justification opportunity bytes of the Administrative Unit pointer area (H3), or when a byte of the Tributary Unit pointer area (TU-i), is received, as follows:
• the interpreted pointer to the payload (PI-PTVAL) is updated, and
• the frame byte counter (PI-NOM-CONT) assumes the maximum value for the pointer for that tributary.

2. A method of updating an interpreted pointer or a generated pointer to a payload in each frame of a tributary in a synchronous digital transmission system adapting an incoming signal to an internal clock rate of the network node by positive or negative justification actions, using a flag technique which involves generating a flag signal identifying the tributary byte indicated by a pointer in each frame, said method including the following steps:
• extracting the interpreted pointer to the payload from an incoming frame;
• assigning a flag bit, which is true when the first payload byte (J1) is occurring;
• storing payload data in an elastic memory;
• comparing the phase, by checking the memory filling level and requiring positive or negative justifications when necessary; and
• generating a new pointer to the payload, where the pointer value is incremented after the positive justification or decremented after the negative justification,
**characterized by** the step of:
performing actions on the Pointer Interpreter or Pointer Generator side in order to always have a flag generation when a justification event is occurring as a consequence of a Positive Justification request (PJRQ), the actions being:
• during the Positive Justification OPPortunity (PJOPP), the frame byte counter (PI-NOM-CONT) assumes the minimum value for the pointer for that tributary, and
• the interpreted pointer to the payload (PI-PTVAL) is updated.

3. A method as claimed in claim 1 or 2
**characterized in that**
• New Data Flag ReQuests (NDFRQ) are real time managed as follows:
• if a New Data Flag ReQuest (NDFRQ) occurs between pointer bytes (H1 and H2) in the Administrative Unit pointer area, in case of two subsequent flags because of a pointer interpreter (PI) resynchronization: a pointer value (PG-PTVAL) is updated again, or
• if a further New Data Flag ReQuest (NDFRQ) occurs between the pointer bytes (H1 and H2) in the Administrative Unit pointer area and if the most significant bits in a pointer value (PG-PTVAL), transmitted with the first pointer byte (H1), have not been modified: a flag (H1TOH2) is active, the remaining eight bits are updated and transmitted with the second pointer byte (H2) when the evolution state is the first state (FIRST), or
• if a further New Data Flag ReQuest (NDFRQ) occurs between the pointer bytes (H1 and H2) and if the two more significant bits in a pointer value (PG-PTVAL), transmitted with the first pointer byte (H1), should be modified: a flag (H1TOH2) is active, only the two most significant bits are updated, and the machine state evolves toward a state (WAIT_NDF), to complete the current New Data Flag (NDF) signalling and then transmit the next one.

4. A method as claimed in claim 1 or 2 or 3,
**characterized in that**
it is implemented in a time sharing environment, treating each tributary unit one at a time where a combinational logic (CO-LO) operating on memory bits maintains in a register an image (IMG) of state variables for one tributary unit (TU) at a time and where said combinational logic may be shared among all the tributary units by synchronizing the sequence of state variables.

5. A network node for transmitting synchronous digital data in a Synchronous Transport Module format in which said data are grouped in containers, wherein said containers include at least a first plurality of said containers each having a respective positive justification location at a predetermined positive location or a respective negative justification location at a predetermined negative location, including devices updating the interpreted or generated pointer value to the payload, having:
• a pointer interpreter device (PI) extracting the pointer to the payload from an incoming frame;
• a flag generating device for generating a flag signal identifying the first payload byte (J1) using a flag technique, including:
• means (COMP) for comparing the interpreted pointer value (PI-PTVAL), indicating the payload displacement, and
• the incoming frame byte counter (PI-NOM-CONT);
• means for generating the flag bit to be assigned to each data byte: 1 when a positive comparison indicates that the first payload byte (J1) is occurring, 0 otherwise;
• at least one memory device (EM) which, under control of a justification device, stores payload bytes of a frame of the incoming signal and outputs the payload bytes at the internal clock rate of the network node;
• a justification device (PC) for adapting an incoming signal to the internal clock rate of the network node by positive or negative justification actions, depending on the filling level of the memory device; and
• a pointer generator device (PG) generating a new pointer to the payload to be inserted in each outgoing frame when positive or negative justification actions were performed,
**characterized in that**
the flag generating device comprises means for, after a Pointer Interpreter or a Pointer Generator justification event, performing actions on the pointer interpreter side or on the pointer generator side in order to always have a flag generation when a group of three bytes (H3) of the Administrative Unit pointer area, or a byte (TU-i) of the Tributary Unit pointer area, is received, said actions being:
• updating the interpreted pointer (PI-PTVAL), and
• arranging in order that the frame byte counter (PI-NOM-CONT) assumes the maximum value for the pointer for that tributary.

6. A network node for transmitting synchronous digital data in a Synchronous Transport Module format in which said data are grouped in containers, wherein said containers include at least a first plurality of said containers each having a respective positive justification location at a predetermined positive location or a respective negative justification location at a predetermined negative location, including devices updating the interpreted or generated pointer value to the payload, having:
• a pointer interpreter device (PI) extracting the pointer to the payload from an incoming frame;
• a flag generating device for generating a flag signal identifying the first payload byte (J1) using a flag technique, including:
• means (COMP) for comparing the interpreted pointer value (PI-PTVAL), indicating the payload displacement, and the incoming frame byte counter (PI-NOM-CONT);
• means for generating the flag bit to be assigned to each data byte: 1 when a positive comparison indicates that the first payload byte (J1) is occurring, 0 otherwise;
• at least one memory device (EM) which, under control of a justification device, stores payload bytes of a frame of the incoming signal and outputs the payload bytes at the internal clock rate of the network node;
• a justification device (PC) for adapting an incoming signal to the internal clock rate of the network node by positive or negative justification actions, depending on the filling level of the memory device; and
• a pointer generator device (PG) generating a new pointer to the payload to be inserted in each outgoing frame when positive or negative justification actions were performed,
**characterized in that**
the flag generating device comprises means for, after a Pointer Interpreter or a Pointer Generator justification event, performing actions on the pointer interpreter side or on the pointer generator side, in order to always have a flag generation when a Positive Justification request (PJRQ) is received, such actions being:
• arranging in order that during the Positive Justification Opportunity (PJOPP), the frame byte counter (PI-NOM-CONT) assumes the minimum value for the pointer for that tributary, and
• updating the interpreted pointer (PI-PTVAL).

7. A network node as claimed in claim 5 or 6,
**characterized in that**
the justification device performs a real time management of New Data Flag ReQuests according to the method of claim 3.

8. A network node as claimed in claim 5 or 6 or 7,
**characterized in that**
it is implemented in a time sharing environment, treating each tributary unit one at the time where a combinational logic (CO-LO) operating on memory bits maintains in a register an image (IMG) of state variables for one tributary unit (TU) at a time and where said combinational logic may be shared among all the tributary units by synchronizing the sequence of state variables.

9. A synchronous digital transmission system for transmitting synchronous digital data in a Synchronous Transport Module format in which said data are grouped in containers, wherein said containers include at least a first plurality of said containers each having a respective positive justification location at a predetermined positive location or a respective negative justification location at a predetermined negative location, including a number of network nodes as claimed in claim 5 or claim 6 or in claim 7 or in claim 8,
**characterized in that**
actions are performed on the pointer interpreter or on the pointer generator side in order to always have a flag generation when a Pointer Interpreter or a Pointer Generator justification event is occurring.

## Patentansprüche

1. Verfahren zum Aktualisieren eines interpretierten Pointers oder eines generierten Pointers für eine Nutzinformation ( payload ) in jedem Rahmen einer Tributary-Einheit in einem synchronen digitalen Übertragungssystem, das ein eingehendes Signal an eine interne Taktrate des Netzwerkknotens durch positive oder negative Stopfvorgänge angleicht, wobei eine Flag- Technik angewandt wird, bei der ein Flag-Signal gebildet wird, das das Tributary Byte kennzeichnet, das durch einen Pointer in jedem Rahmen angezeigt wird, wobei das erwähnte Verfahren folgende Schritte umfaßt:
• Abtrennen des interpretierten Pointers für Nutzinformation aus einem eingehenden Rahmen;
• Bilden eines Flag- Bits, das wahr ist, wenn das erste Nutzinformations- Byte ( J1 ) auftritt;
• Speichern der Nutzinformationsdaten in einen elastischen Speicher;
• Vergleich ( PC ) der Phasen eines Schreibzählers ( WC ) mit denen eines Lesezählers ( RC ) durch Überwachen des Speicherfüllgrads und Anfordern von positiven oder negativen Stopfvorgängen, wenn dies erforderlich ist; und
• Generieren eines neuen Pointers für Nutzinformation, wobei der Pointerwert nach jedem positiven Stopfvorgang schrittweise erhöht wird oder bei negativem Stopfvorgang erniedrigt wird,
**dadurch gekennzeichnet, daß**
Maßnahmen auf der Pointerinterpretationsseite oder der Pointergenerationsseite ergriffen werden, die sicherstellen, daß immer dann Flag- Signale erzeugt werden, wenn ein Stopfvorgang auftritt, wenn eine Gruppe von 3 negativen Justification Opportunity Bytes im Pointerbereich der Administrative Unit ( H3 ) auftritt, oder wenn ein Byte aus dem Pointerbereich der Tributary- Einheit ( TU-i ) empfangen wird wie folgt:
• der interpretierte Pointer für Nutzinformation ( PI- PTVAL ) wird aktualisiert, und
• der Rahmenbytezähler ( PI- NOM- CONT ) nimmt den Maximalwert für den Pointer für die betreffende Tributary- Einheit an.

2. Verfahren zum Aktualisieren eines interpretierten Pointers oder eines generierten Pointers für eine Nutzinformation ( payload ) in jedem Rahmen einer Tributary-Einheit in einem synchronen digitalen Übertragungssystem, das ein eingehendes Signal an eine interne Taktrate des Netzwerkknotens durch positive oder negative Stopfvorgänge angleicht, wobei eine Flag- Technik angewandt wird, bei der ein Flag-Signal gebildet wird, das das Tributary- Byte kennzeichnet, das durch einen Pointer in jedem Rahmen angezeigt wird, wobei das erwähnte Verfahren folgende Schritte umfaßt:
• Abtrennen des interpretierten Pointers für Nutzinformation aus einem eingehenden Rahmen;
• Bilden eines Flag- Bits, das wahr ist, wenn das erste Nutzinformations- Byte ( J1 ) auftritt;
• Speichern der Nutzinformationsdaten in einen elastischen Speicher;
• Vergleich der Phasen eines durch Überwachen des Speicherfüllgrads und Anfordern von positiven oder negativen Stopfvorgängen, wenn dies erforderlich ist; und
• Generieren eines neuen Pointers für Nutzinformation, wobei der Pointerwert nach jedem positiven Stopfvorgang schrittweise erhöht wird oder bei negativem Stopfvorgang erniedrigt wird,
**dadurch gekennzeichnet, daß**
Maßnahmen auf der Pointerinterpretationsseite oder der Pointergenerationsseite ergriffen werden, die sicherstellen, daß immer dann Flag- Signale erzeugt werden, wenn ein Stopfvorgang als Konsequenz einer positiven Stopfanforderung ( PJRQ ) auftritt, wobei diese Maßnahmen folgendes umfassen:
• während positiven Justification OPPortunity ( PJOPP ) nimmt der Rahmenbytezähler ( PI- NOM- CONT ) den Minimalwert für den Pointer für die betreffende Tributary- Einheit an, und
• der interpretierte Pointer für Nutzinformation ( PI- PTVAL ) wird aktualisiert.

3. Verfahren nach Anspruch 1 oder 2,
**dadurch gekennzeichnet, daß**
• neue Daten- Flag- Anforderungen ( NDFRQ ) in Echtzeit wie folgt gemanagt werden:
• wenn eine neue Daten- Flag- Anforderung ( NDFRQ ) zwischen den Pointer-Bytes ( H1 und H2 ) im Pointerbereich der Administrative Unit auftritt und durch Resynchronisation des Pointerinterpreters ( PI ) zwei aufeinanderfolgende Flags erscheinen:
wird der Pointerwert ( PG- PTVAL ) erneut aktualisiert, oder
• wenn eine weitere neue Daten- Flag- Anforderung ( NDFRQ ) zwischen den Pointer- Bytes ( H1 und H2 ) im Pointerbereich der Administrative Unit auftritt und wenn die most significant Bits im Pointerwert ( PGVAL ), die mit dem ersten Pointer- Byte ( H1 ) übertragen werden, nicht geändert wurden, wird ein Flag ( H1TOH2 ) aktiviert, die verbleibenden acht Bits werden aktualisiert und mit dem zweiten Pointer- Byte ( H2 ) übertragen, wenn der Evolutionsstatus der erste Status ( FIRST ) ist, oder
• wenn eine weitere neue Daten- Flag- Anforderung ( NDFRQ ) zwischen den Pointer- Bytes ( H1 und H2 ) auftritt und wenn die zwei most significant Bits im Pointerwert
( PGVAL ), die mit dem ersten Pointer- Byte ( H1 ) übertragen werden, geändert werden sollten, wird ein Flag ( H1TOH2 ) aktiviert, nur die zwei most significant Bits werden aktualisiert und der Maschinenstatus wird zu einem Status ( WAIT_NDF ) fortgeschaltet, um das gegenwärtige neue Daten- Flag ( NDF ) zu vervollständigen und dann das nächste zu übertragen.

4. Verfahren nach Anspruch 1, 2 oder 3,
**dadurch gekennzeichnet, daß**
es in einer Time- Sharing- Umgebung realisiert wird, in der jede Tributary- Einheit einzeln bearbeitet wird, wobei eine Kombinationslogik ( CO- LO ) Speicherbits verarbeitet und in einem Register ein Abbild ( IMG ) von Statusvariablen für diese zur Zeit bearbeitete eine Tributary- Einheit ( TU ) zur Verfügung stellt und wobei die erwähnte Kombinationslogik von allen Tributary- Einheiten mitbenutzt wird durch Synchronisation der Folge von Statusvariablen.

5. Netzwerkknoten für die Übertragung von synchronen digitalen Daten in einem "Synchronous Transport Module"- Format in dem besagte Daten in Containern zusammengefaßt werden, wobei diese erwähnten Container wenigstens eine erste Mehrzahl von besagten Containern umfassen, die alle jeweils eine Position für positive Justification- Daten an vorbestimmter Stelle oder eine Position für negative Justification- Daten an entsprechender vorbestimmter Stelle aufweisen, einschließlich Einrichtungen zur Aktualisierung interpretierter oder generierter Pointerwerte für Nutzinformation, bestehend aus:
• einer Pointer- Interpretationseinrichtung (PI) zum Abtrennen des Pointers für Nutzinformation aus dem eingehenden Rahmen;
• einer Flag- Erzeugungseinrichtung zur Abgabe eines Flag- Signals, das das erste Nutzinformations- Byte (J1 ) durch Flag- Technik kennzeichnet, bestehend aus:
• Mitteln ( COMP ) zum Vergleichen der interpretierten Pointerwerte ( PI- PTVAL ),
die den Abstand zur Nutzinformation darstellen, und
• einem Zähler für eingehende Framebytes ( PI- NOM- CONT);
• Mitteln zum Erzeugen eines Flag- Bits, das jedem Daten- Byte zugeordnet wird:
1, wenn ein positives Vergleichsergebnis anzeigt, daß das erste Nutzinformations-Byte ( J1 ) anliegt, sonst 0;
• wenigstens eine Speichereinrichtung ( EM ), gesteuert von einer Justification-Einrichtung, zur Speicherung von Nutzinformations- Bytes eines Rahmens des eingehenden Signals und zur Ausgabe der Nutzinformations- Bytes mit der internen Taktrate des Netzwerkknotens;
• einer Justification- Einrichtung ( PC) zur Anpassung eines eingehenden Signals an die interne Taktrate des Netzwerkknotens durch positive oder negative Stopfvorgänge in Abhängigkeit vom Füllungsgrad der Speichereinrichtung; und
• einer Pointer- Generator- Einrichtung ( PG ) zur Erzeugung eines neuen Pointerwerts für die Nutzinformation, der in jedem ausgehenden Rahmen eingefügt wird, wenn positive oder negative Stopfvorgänge durchgeführt wurden,
**dadurch gekennzeichnet, daß**
die Flag- Erzeugungseinrichtung Mittel umfaßt, die nach einem Pointer- Interpreteroder Pointer- Generator- Justification- Ereignis mit Maßnahmen auf der Pointer-Interpreter oder auf der Pointer- Generator- Seite sicherstellen, daß immer ein Flag erzeugt wird, wenn eine Gruppe von 3 negativen Justification Opportunity Bytes im Pointerbereich der Administrative Unit ( H3 ) auftritt, oder wenn ein Byte aus dem Pointerbereich der Tributary- Einheit ( TU-i ) empfangen wird, wobei diese Maßnahmen umfassen:
• Aktualisieren des interpretierten Pointers für Nutzinformation ( PI- PTVAL ), und
• Sicherstellen, daß der Rahmenbytezähler ( PI- NOM- CONT ) den Maximalwert für den Pointer für die betreffende Tributary- Einheit annimmt.

6. Netzwerkknoten für die Übertragung von synchronen digitalen Daten in einem "Synchronous Transport Module"- Format in dem besagte Daten in Containern zusammengefaßt werden, wobei diese erwähnten Container wenigstens eine erste Mehrzahl von besagten Containern umfassen, die alle jeweils eine Position für positive Justification- Daten an vorbestimmter Stelle oder eine Position für negative Justification- Daten an entsprechender vorbestimmter Stelle aufweisen, einschließlich Einrichtungen zur Aktualisierung interpretierter oder generierter Pointerwerte für Nutzinformation, bestehend aus:
• einer Pointer- Interpretationseinrichtung ( PI ) zum Abtrennen des Pointers für Nutzinformation aus dem eingehenden Rahmen;
• einer Flag- Erzeugungseinrichtung zur Abgabe eines Flag- Signals, das das erste Nutzinformations- Byte ( J1 ) durch Flag- Technik kennzeichnet, bestehend aus:
• Mitteln ( COMP ) zum Vergleichen der interpretierten Pointerwerte (PI- PTVAL), die den Abstand zur Nutzinformation darstellen, und einem Zähler für eingehende Framebytes ( PI- NOM- CONT );
• Mitteln zum Erzeugen eines Flag- Bits, das jedem Daten- Byte zugeordnet wird:
1, wenn ein positives Vergleichsergebnis anzeigt, daß das erste Nutzinformations-Byte ( J1 ) anliegt, sonst 0;
• wenigstens eine Speichereinrichtung ( EM ), gesteuert von einer Justification-Einrichtung, zur Speicherung von Nutzinformations- Bytes eines Rahmens des eingehenden Signals und zur Ausgabe der Nutzinformations- Bytes mit der internen Taktrate des Netzwerkknotens;
• einer Justification- Einrichtung ( PC ) zur Anpassung eines eingehenden Signals an die interne Taktrate des Netzwerkknotens durch positive oder negative Stopfvorgänge in Abhängigkeit vom Füllungsgrad der Speichereinrichtung; und
• einer Pointer- Generator- Einrichtung ( PG) zur Erzeugung eines neuen Pointerwerts für die Nutzinformation, der in jedem ausgehenden Rahmen eingefügt wird, wenn positive oder negative Stopfvorgänge durchgeführt wurden,
**dadurch gekennzeichnet, daß**
die Flag- Erzeugungseinrichtung Mittel umfaßt, die nach einem Pointer- Interpreteroder Pointer- Generator- Justification- Ereignis mit Maßnahmen auf der Pointer-Interpreter oder auf der Pointer- Generator- Seite sicherstellen, daß immer ein Flag erzeugt wird, wenn eine positive Justification- Anforderung ( PJRQ ) empfangen wird wobei diese Maßnahmen umfassen:
• Sicherstellen, daß während der positiven Justification Opportunity ( PJOPP ) der Rahmenbytezähler ( PI- NOM- CONT ) den Minimalwert für den Pointer für die betreffende Tributary- Einheit annimmt, und
• Aktualisieren des interpretierten Pointers für Nutzinformation ( PI- PTVAL ).

7. Netzwerkknoten nach Anspruch 5 oder 6,
**dadurch gekennzeichnet, daß**
die Justification- Einrichtung neue Daten- Flag- Anforderungen in Echtzeit nach dem Verfahren von Anspruch 3 managt.

8. Netzwerkknoten nach Anspruch 5, 6 oder 7,
**dadurch gekennzeichnet, daß**
dieser in einer Time- Sharing- Umgebung realisiert wird, in der jede Tributary- Einheit einzeln bearbeitet wird, wobei eine Kombinationslogik ( CO- LO ) Speicherbits verarbeitet und in einem Register ein Abbild ( IMG ) von Statusvariablen für diese zur Zeit bearbeitete eine Tributary- Einheit ( TU ) zur Verfügung stellt und wobei die erwähnte Kombinationslogik von allen Tributary- Einheiten mitbenutzt wird durch Synchronisation der Folge von Statusvariablen.

9. Synchrones digitales Übertragungssystem für die Übertragung von synchronen digitalen Daten in einem "Synchronous Transport Module"- Format in dem besagte Daten in Containern zusammengefaßt werden, wobei diese erwähnten Container wenigstens eine erste Mehrzahl von besagten Containern umfassen, die alle jeweils eine Position für positive Justification- Daten an vorbestimmter Stelle oder eine Position für negative Justification- Daten an entsprechender vorbestimmter Stelle aufweisen, einschließlich einer Anzahl von Netzwerkknoten nach Anspruch 5 oder Anspruch 6 oder Anspruch 7 oder Anspruch 8
**dadurch gekennzeichnet, daß**
Maßnahmen auf der Pointer- Interpreter oder auf der Pointer- Generator- Seite sicherstellen, daß immer ein Flag erzeugt wird, wenn ein Pointer- Interpreter oder Pointer- Generator- Justification- Ereignis auftritt.

## Revendications

1. Méthode de mise à jour d'un pointeur interprété ou d'un pointeur généré vers une charge utile dans chaque trame d'un tributaire dans un système de transmission numérique synchrone adaptant un signal entrant à une cadence d'horloge interne d'un noeud de réseau par des actions de justification positive ou négative, utilisant une technique d'indicateur qui implique la génération d'un signal indicateur identifiant l'octet tributaire indiqué par un pointeur dans chaque trame, ladite méthode incluant les étapes suivantes :
extraction du pointeur interprété vers la charge utile depuis une trame entrante ;
attribution d'un bit indicateur, qui est vrai quand le premier octet de charge utile (J1) se produit ;
stockage des données de charge utile dans une mémoire élastique ;
comparaison (PC) des phases depuis un compteur d'écriture (WC) et un compteur de lecture (RC), en contrôlant le niveau de remplissage de la mémoire et en requérant des justifications positives ou négatives (PJRQ, NJRQ) le cas échéant ; et
génération d'un nouveau pointeur vers la charge utile, où la valeur du pointeur est incrémentée après la justification positive ou décrémentée après la justification négative,
**caractérisée par** l'étape suivante :
exécution d'actions du côté de l'Interprète du Pointeur ou du Générateur du Pointeur, afin de toujours avoir une génération d'indicateur quand un événement de justification se produit quand un groupe de 3 octets d'opportunité de justification négative de la zone du pointeur d'Unité Administrative (H3) ou quand un octet de la zone du pointeur d'Unité Tributaire (TU-i) est reçu, comme suit :
le pointeur interprété vers la charge utile (PI-PTVAL) est mis à jour, et
le compteur d'octets de trame (PI-NOM-CONT) prend la valeur maximale pour le pointeur pour ce tributaire.

2. Méthode de mise à jour d'un pointeur interprété ou d'un pointeur généré vers une charge utile dans chaque trame d'un tributaire dans un système de transmission numérique synchrone adaptant un signal entrant à une cadence d'horloge interne du noeud de réseau par des actions de justification positive ou négative, utilisant une technique d'indicateur qui implique la génération d'un signal indicateur identifiant l'octet tributaire indiqué par un pointeur dans chaque trame, ladite méthode incluant les étapes suivantes :
extraction du pointeur interprété vers la charge utile depuis une trame entrante ;
attribution d'un bit indicateur, qui est vrai quand le premier octet de charge utile (J1) se produit ;
stockage de données de charge utile dans une mémoire élastique ;
comparaison de la phase, en contrôlant le niveau de remplissage de la mémoire et en requérant des justifications positives ou négatives le cas échéant ; et
génération d'un nouveau pointeur vers la charge utile, où la valeur du pointeur est incrémentée après la justification positive ou décrémentée après la justification négative,
**caractérisée par** l'étape suivante :
exécution d'actions du côté de l'Interprète du Pointeur ou du Générateur du Pointeur afin de toujours avoir une génération d'indicateur quand un événement de justification se produit à la suite d'une requête de Justification Positive (PJRQ), les actions étant :
lors de l'OPPortunité de Justification Positive (PJOPP), le compteur d'octets de trame (PI-NOM-CONT) prend la valeur minimale pour le pointeur pour ce tributaire, et
le pointeur interprété vers la charge utile (PI-PTVAL) est mis à jour.

3. Méthode selon la revendication 1 ou 2
**caractérisée en ce que**
de Nouvelles ReQuêtes d'Indicateur de Données (NDFRQ) sont gérées en temps réel comme suit :
si une Nouvelle ReQuête d'Indicateur de Données (NDFRQ) se produit entre les octets du pointeur (H1 et H2) dans la zone du pointeur d'Unité Administrative, dans le cas de deux indicateurs consécutifs en raison de la re-synchronisation de l'interprète du pointeur (PI) : une valeur de pointeur (PG-PTVAL) est à nouveau mise à jour, ou
si une autre Nouvelle ReQuête d'Indicateur de Données (NDFRQ) se produit entre les octets du pointeur (H1 et H2) dans la zone du pointeur d'Unité Administrative et si les bits les plus significatifs dans une valeur de pointeur (PG-PTVAL), transmis avec le premier octet du pointeur (H1), n'ont pas été modifiés : un indicateur (H1TOH2) est actif, les huit bits restants sont mis à jour et transmis avec le second octet du pointeur (H2) quand l'état de l'évolution est le premier état (FIRST), ou
si une autre Nouvelle ReQuête d'Indicateur de Données (NDFRQ) se produit entre les octets du pointeur (H1 et H2) et si les deux bits les plus significatifs dans une valeur de pointeur (PG-PTVAL), transmis avec le premier octet du pointeur (H1), doivent être modifiés : un indicateur (H1TOH2) est actif, seuls les deux bits les plus significatifs sont mis à jour, et l'état de la machine évolue vers un état (WAIT_NDF), pour achever l'actuel signalement du Nouvel Indicateur de Données (NDF), puis transmettre le suivant.

4. Méthode selon les revendications 1 ou 2 ou 3,
**caractérisée en ce que**
elle est mise en oeuvre dans un environnement de temps partagé, en traitant chaque unité tributaire une par une où une logique combinatoire (CO-LO) fonctionnant sur les bits de mémoire conserve dans un registre une image (IMG) de variables d'état pour une unité tributaire (TU) à un instant et où ladite logique combinatoire peut être partagée parmi toutes les unités tributaires en synchronisant la séquence de variables d'état.

5. Noeud de réseau destiné à transmettre des données numériques synchrones dans un format de Module de Transport Synchrone, dans lequel lesdites données sont regroupées dans des conteneurs, dans lequel lesdits conteneurs comprennent au moins une première pluralité desdits conteneurs, chacun ayant un emplacement de justification positive respectif à un emplacement positif prédéterminé ou un emplacement de justification négative respectif à un emplacement négatif prédéterminé, comprenant des dispositifs mettant à jour la valeur de pointeur interprété ou généré vers la charge utile, ayant :
un dispositif d'interprétation du pointeur (PI) extrayant le pointeur vers la charge utile depuis une trame entrante ;
un dispositif de génération d'indicateurs destiné à générer un signal indicateur identifiant le premier octet de charge utile (J1) à l'aide d'une technique d'indicateur, comprenant :
des moyens (COMP) destinés à comparer la valeur du pointeur interprété (PI-PTVAL), indiquant le déplacement de charge utile, et
le compteur d'octets de la trame entrante (PI-NOM-CONT) ;
des moyens destinés à générer le bit indicateur à attribuer à chaque octet de données : 1 quand une comparaison positive indique que le premier octet de charge utile (J1) se produit, 0 autrement ;
au moins un dispositif de mémoire (EM) qui, sous le contrôle d'un dispositif de justification, stocke les octets de charge utile d'une trame du signal entrant et envoie en sortie les octets de charge utile à la cadence de l'horloge interne du noeud de réseau ;
un dispositif de justification (PC) destiné à adapter un signal entrant à la cadence de l'horloge interne du noeud de réseau par des actions de justification positive ou négative, en fonction du niveau de remplissage du dispositif de mémoire ; et
un dispositif de génération de pointeur (PG) générant un nouveau pointeur vers la charge utile à insérer dans chaque trame sortante quand des actions de justification positive ou négative ont été effectuées,
**caractérisé en ce que**
le dispositif de génération d'indicateur comprend des moyens destinés, après un événement de justification d'un Interprète de Pointeur ou d'un Générateur de Pointeur, à effectuer des actions du côté de l'interprète de pointeur ou du côté du générateur de pointeur afin de toujours avoir une génération d'indicateur quand un groupe de trois octets (H3) de la zone de pointeur d'Unité Administrative ou un octet (TU-i) de la zone de pointeur d'Unité Tributaire est reçu, lesdites actions étant :
la mise à jour du pointeur interprété (PI-PTVAL), et
l'agencement afin que le compteur d'octets de trame (PI-NOM-CONT) prenne la valeur maximale pour le pointeur pour ce tributaire.

6. Noeud de réseau destiné à transmettre des données numériques synchrones dans un format de Module de Transport Synchrone, dans lequel lesdites données sont regroupées dans des conteneurs, dans lequel lesdits conteneurs comprennent au moins une première pluralité desdits conteneurs, chacun ayant un emplacement de justification positive respectif à un emplacement positif prédéterminé ou un emplacement de justification négative respectif à un emplacement négatif prédéterminé, comprenant des dispositifs mettant à jour la valeur du pointeur interprété ou généré vers la charge utile, ayant :
un dispositif d'interprétation du pointeur (PI) extrayant le pointeur vers la charge utile depuis une trame entrante ;
un dispositif de génération d'indicateur destiné à générer un signal indicateur identifiant le premier octet de charge utile (J1) à l'aide d'une technique d'indicateur, comprenant :
des moyens (COMP) destinés à comparer la valeur du pointeur interprété (PI-PTVAL), indiquant le déplacement de charge utile, et le compteur d'octets de la trame entrante (PI-NOM-CONT) ;
des moyens destinés à générer le bit indicateur à attribuer à chaque octet de données : 1 quand une comparaison positive indique que le premier octet de charge utile (J1) se produit, 0 autrement ;
au moins un dispositif de mémoire (EM) qui, sous le contrôle d'un dispositif de justification, stocke les octets de charge utile d'une trame du signal entrant et envoie en sortie les octets de charge utile à la cadence de l'horloge interne du noeud de réseau ;
un dispositif de justification (PC) destiné à adapter un signal entrant à la cadence de l'horloge interne du noeud de réseau par des actions de justification positive ou négative, en fonction du niveau de remplissage du dispositif de mémoire ; et
un dispositif de génération de pointeur (PG) générant un nouveau pointeur vers la charge utile à insérer dans chaque trame sortante quand des actions de justification positive ou négative ont été effectuées,
**caractérisé en ce que**
le dispositif de génération d'indicateur comprend des moyens destinés, après un événement de justification d'un Interprète de Pointeur ou d'un Générateur de Pointeur, à effectuer des actions du côté de l'interprète de pointeur ou du côté du générateur de pointeur, afin de toujours avoir une génération d'indicateur quand une requête de Justification Positive (PJRQ) est reçue, ces actions étant :
l'agencement afin que, lors de l'Opportunité de Justification Positive (PJOPP), le compteur d'octets de trame (PI-NOM-CONT) prenne la valeur minimale pour le pointeur pour ce tributaire, et
la mise à jour du pointeur interprété (PI-PTVAL).

7. Noeud de réseau selon les revendications 5 ou 6,
**caractérisé en ce que**
le dispositif de justification effectue une gestion en temps réel des Nouvelles Requêtes d'Indicateur de Données selon la méthode de la revendication 3.

8. Noeud de réseau selon les revendications 5 ou 6 ou 7,
**caractérisé en ce que**
il est mis en oeuvre dans un environnement de temps partagé, en traitant chaque unité tributaire une par une où une logique combinatoire (CO-LO) fonctionnant sur les bits de mémoire conserve dans un registre une image (IMG) de variables d'état pour une unité tributaire (TU) à un instant et où ladite logique combinatoire peut être partagée parmi toutes les unités tributaires en synchronisant la séquence de variables d'état.

9. Système de transmission numérique synchrone destiné à transmettre des données numériques synchrones dans un format de Module de Transport Synchrone, dans lequel lesdites données sont regroupées dans des conteneurs, dans lequel lesdits conteneurs comprennent au moins une première pluralité desdits conteneurs, chacun ayant un emplacement de justification positive respectif à un emplacement positif prédéterminé ou un emplacement de justification négative respectif à un emplacement négatif prédéterminé, comprenant un certain nombre de noeuds de réseau selon la revendication 5 ou la revendication 6 ou la revendication 7 ou la revendication 8,
**caractérisé en ce que**
des actions sont effectuées du côté de l'interprète de pointeur ou du côté du générateur de pointeur, afin de toujours avoir une génération d'indicateur quand un événement de justification d'un Interprète de Pointeur ou d'un Générateur de Pointeur se produit.
